# EUROPEAN PATENT APPLICATION

(11) **EP 2 610 170 A1**
(43) Date of publication of application: **03.07.2013**
(21) Application number: 11380105.4
(22) Date of filing: 28.12.2011
(51) Int. Cl.: B64C 25/52

(54) **Air drag reduction for an undercarriage with skids of a rotary wing aircraft**

(71) Applicant: EUROCOPTER ESPAÑA, S.A., Albacete (ES)
(72) Inventor: Jimenez Garcia, Juan Manuel, 45593 Toledo (ES)
(74) Representative: GPI & Associés

(57) **Abstract**

The invention pertains to an undercarriage (2) having skids for a rotary wing aircraft (1).

For air drag reduction, the undercarriage (2) is equipped with a device (3), suitable for creating an artificial flow of air around the undercarriage (2), particularly at the vicinity of transverse elements (10-11), in order to delay / displace rearwards the location of the breaking point (27) and in order to increase the boundary layer energy.
An embodiment proposes a series of slots or nozzle bores, allocating an extra airflow into the boundary layer, with the result of reducing the overall air drag of the undercarriage (2) as well as the air drag of the whole rotary wing aircraft (1), and thus provoking an air drag reduction effect.

## Description

The invention relates to the field of rotary wing aircraft undercarriages, also referred to as landing gears. The undercarriages having a pair of longitudinally extending friction skids are those to which the invention applies.

To summarize, such a skid undercarriage comprises at least : two transverse elements (front and aft) also called transversal arms, said transverse elements being secured to a force take-up structure of the aircraft, and respectively attached to via lateral portions (left or right) of the transverse elements, at a left friction skids and a right friction skids, both generally extending longitudinally.

In general, rotary wing aircrafts of heavy or medium tonnage are equipped with wheeled undercarriages. Possibly, wheeled undercarriages are of the retractable type, thus not provoking air drag when retracted.

The most of the lighter rotary wing aircrafts and some medium weighted ones are equipped with undercarriages of the friction skid type. An undercarriage of the skid type looks, in principle, mechanically less complex than a wheeled undercarriage, lighter in weight, and is often advantageous for landing on a soft, uneven or raw of surface e.g. like sand or snow. Most skid type undercarriages are not retractable.

### BACKGROUND OF THE INVENTION

Skid undercarriages have been commonplace for many years, and were already mounted on rotorcraft such as those of B.N. Yuriev in 1910 or of Louis Brennan in 1924, or indeed in 1947 on the SNIAS SE3110M helicopter. Some recent skids are united at the front by a junction section referred to as a "mustache".

For instance, the document GB2314053 describes a helicopter landing gear, comprising two skids. The two skids are attached to the structure of the aircraft by an inclined transition zone with double bending or curvature, as two transition zones constitutes together an integrated offset front cross-piece. In some embodiments, a rear cross-piece consists, for its front portion, of a bent tube having an aerodynamic profile forming a convex leading edge, this tube being extended towards the rear by an added fairing convex external profile, forming a trailing edge.

The document US7918417 describes an undercarriage for a rotary wing aircraft with skids. A fraction of the energy during a landing under normal conditions is absorbed by deforming elastically. A connection system with pairs of front and / or rear buckling struts are arranged in such a manner as to deform in the plastic range by buckling, while an assembly means is statically-redundant to the force take-up structure.

The document US4196878 describes a skid undercarriage with a single transverse element which is mounted via clamps to a transversely central portion of the force take-up structure. This skid undercarriage is of the subcritical and rigid type, and typically associated with flexible aft blades.

The document GB1212035 describes a lift producing pole called blown pole. This rotating blown poles is for helicopters or controls for conventional aircrafts. A blown pole should not impose too much drag and the drag increment due to the pole is controllable. The blown pole is provided which has two sets of differently-angled slots, such that air can be blown to induce circulation around the pole member in either direction, or air can be blown in both directions at once. A control force is obtained in either direction at right angles to the direction of movement. If connection of one set of slots to the air supply produces lift, by connecting instead the other set of slots to the air supply negative lift will be obtained. In the absence of any blowing some drag will result. This can be reduced substantially to zero if a small amount of air is blown in both directions at once.

The document US3362660 describes fluid dynamic braking for aircrafts. The aircraft is equipped with laterally projecting members, each formed with elongated apertures on opposite sides of a bluff trailing edge portion. Means are provided for discharging different boundary layer control streams through various apertures in opposite directions. Thus, an opposed lift is produced, which induces drag to retard the aircraft.

The document US2939650 describes an airplane with boundary layer control. So as to reduce head resistance and increase lift of a wing, is used a gas under pressure which is discharged through slots pierced in said wing. A pressure drop is created in the interior of the wing, to clause suction of the outside air through the holes in the front edge area of the wing.

### TECHNICAL. PROBLEMS IN PRIOR ART

Like wheeled undercarriages, such skid undercarriages are subjected to a phenomenon called dynamic air drag, mostly when the aircraft is having a forward or cruise flight.

In aerodynamics, the dynamic air drag is sometimes called air resistance. For aircrafts, the dynamic air drag is caused by so-called drag forces that oppose the relative motion of the aircraft through the ambient air during a flight. Dynamic drag forces act quite in the same direction than the oncoming flow velocity, but in a way opposite to this oncoming flow velocity. Air drag forces depend on velocity. For a flying aircraft moving through the ambient air, the drag is the component of the net aerodynamic or hydrodynamic force acting opposite to the direction of the movement. A component orthogonal to a perpendicular plan to this direction is called lift. Therefore drag opposes the motion of the object, and in a powered vehicle it is overcome by thrust.

Consequently, the whole rotary wing aircraft is suffering from the dynamic air drag caused by its skid undercarriage. Among other drawbacks, from such a dynamic air drag, may result in e.g.: a lower air penetration coefficient, a more annoying and hearable noise and a raise up of the energy consumption of the aircraft.

In some cases, even the piloting ability of the aircraft may be somewhat impaired by such a dynamic air drag.

In heavy helicopter where wheel landing gears are usual, these landing gears are retractable inside some dedicated cavity in the fuselage, so as to reduce dynamic air drag during flight. In smaller rotary wing aircrafts, there is little or no room available for receiving such retractable landing gears with wheels. This is another reason why various smaller and medium rotary wing aircrafts are equipped with skids undercarriage, i.e. not retractable.

### OBJECTS AND SUMMARY OF THE INVENTION

The invention aims to solve the technical problems encountered with the prior art, and exposed above.

To this end, the invention provides a process for reducing the dynamic air drag induced by an undercarriage for a rotary wing aircraft.

The invention also provides a device for reducing the dynamic air drag induced by an undercarriage for a rotary wing aircraft.

The invention further provides an undercarriage for a rotary wing aircraft, equipped with a device for reducing the dynamic air drag.

The invention furthermore provides a rotary wing aircraft, equipped with an undercarriage having a device for reducing the dynamic air drag.

The invention is defined by the appended claims.

### BRIEF DESCRIPTION OF THE DRAWINGS

The invention is described below with reference to embodiments given by way of non-limiting examples and shown in the accompanying drawings.
Figure 1 shows a perspective front and lateral part view of a rotary wing aircraft according to the invention, equipped for obtaining a reduction of the air drag caused by a "mustache" type landing gear.
Figure 2 shows a lateral part view of a landing gear with skids according to the invention, for a rotary wing aircraft, a reduction of the air drag by landing gear being obtained via integrated inside hollow structures arranged into the skids and into the front transverse arm of the landing gear, these structures forming a symmetrical air drag reduction device.
Figure 3 shows a lateral part view of one lateral branch of a fully integrated air drag reduction device according to the invention, including from upstream (left) to downstream (right) :
   an airflow intake front mouth, a first restriction rearwards converging section, an accelerated airflow conveying duct, a second restriction rearwards converging section and a double side airfoil distribution arrangement.
Figure 4 shows a perspective rearwards longitudinal view of a lateral branch of an air drag reduction device according to the invention similar to the one of figure 3, with more detailed vision of the double side airfoil distribution arrangement.
Figure 5 shows a perspective rearwards longitudinal part view of a lateral branch of an air drag reduction device similar to the ones of figures 3 or 4, illustrating how an integrated drag reduction according to the invention may involve from upstream (background) to downstream (foreground), an airflow intake stage, a first restriction rearwards converging stage, an accelerated airflow conveying stage, a second restriction rearwards converging stage and a double side airfoil distribution stage inducing a rearward offsetting stage.
Figure 6 is a theoretical view of airflow remarkable flux around a structural item of a landing gear, showing a drag reduction according to the invention, with downwards turbulences and rearwards offsetting of breaking away points of boundary layers.
Figure 7 shows is an upward planar part view of a downstream portion of an accelerated airflow conveying duct, a second restriction rearwards converging section and a double side airfoil distribution arrangement, in an air drag reduction device according to the invention.

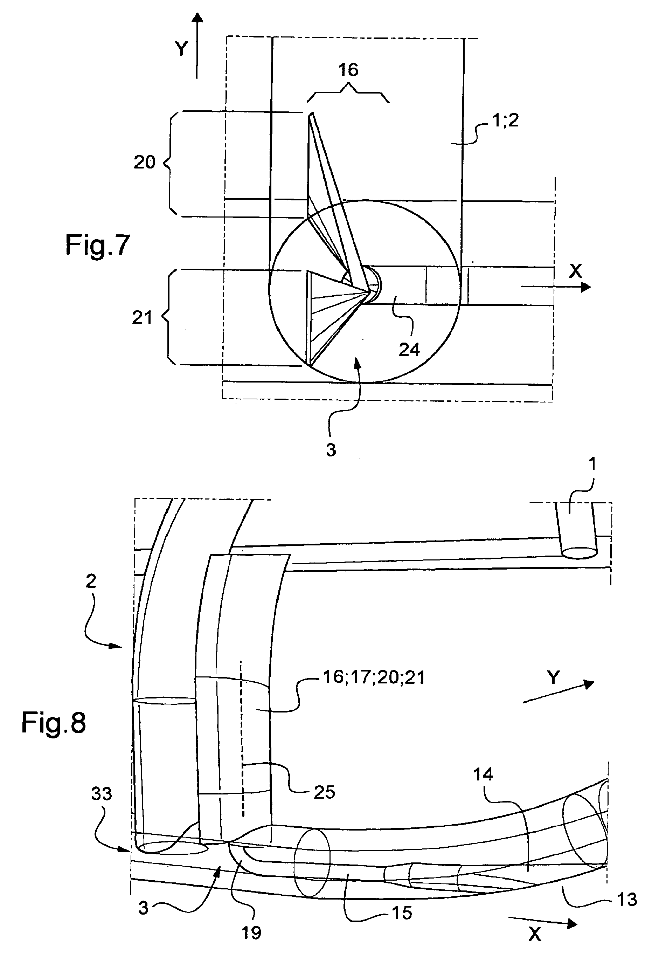

Figure 8 shows a lateral part view of one lateral branch of an partly external air drag reduction device according to the invention, including from upstream (right) to downstream (left): an integrated airflow intake front mouth, an integrated first restriction rearwards converging section, an integrated first accelerated airflow conveying duct, an emerging connection plug, an external second accelerated airflow conveying duct and an external double side airfoil distribution arrangement, said external duct and arrangement being frontally covered by an external aerodynamic firing also called external spoiler funnel.
Figure 9 shows an upward planar view of a partly external air drag reduction device similar to the one of figure 8, showing details of an external spoiler funnel where a double side airfoil distribution arrangement has securing attachment legs for the external spoiler funnel upon a transverse arm of a landing gear.
Figure 10 shows a perspective front view of a partly external air drag reduction device similar to the one of figure 8 or 9.

### MORE DETAILED DESCRIPTION

Embodiments of the invention are described below.

In various drawings, where elements that are similar are given the same reference numerals, there can be seen three mutually orthogonal directions X, Y and Z.

On the figures, a rotary wing aircraft 1 is equipped with a landing gear or undercarriage 2. One (or a plurality of) air drag reduction device(s) 3 are embarked into the aircraft 1.

A first direction Z, referred to as "yaw" direction, corresponds to the height and the thickness of the structures described: terms such as up/down or lower/upper are relative thereto. For simplification purposes, this direction Z is sometimes said to be vertical.

Another direction X referred to as being "longitudinal" or "roll" corresponds to the length dimension of the structures described. Terms such as front/rear are relative thereto. For simplification purposes, this direction X is sometimes said to be horizontal. In the rotary wing aircraft, upstream / downstream refers to orientations along with this longitudinal direction X.

Yet another direction Y, said to be "transverse" or "pitch", corresponds to the width or lateral dimension of the structures described. The terms "side" or "left" right" are relative thereto. For simplification purposes, this direction Y is sometimes said to be horizontal.

The directions X, Y and Z together define a referential XYZ.

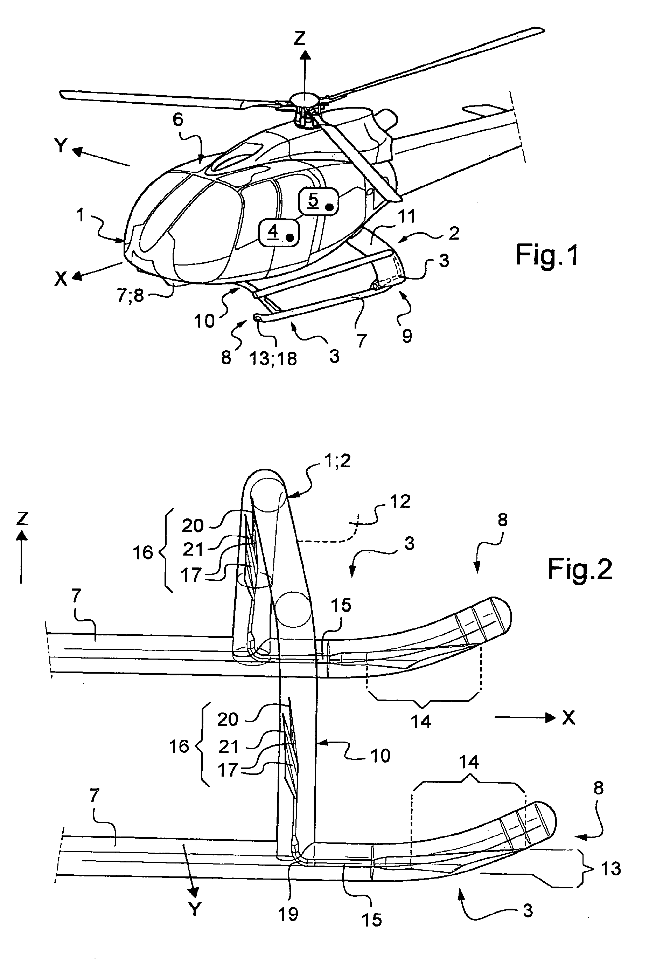

In figure 1, the aircraft 1 is of the helicopter type, and is equipped with flight control system 4, e.g. of the fly-by-wire type. Besides, the aircraft 1 is equipped with at least one electric power supply system 5. Here, both the flight control system 4 and electric power supply system 5 are embarked inside a force take-up structure or body structure 6 of the aircraft 1. The undercarriage 2 is secured to this force take-up structure 6.

Before exposing how the invention works, are previously detailed embodiments of the undercarriage 2 and of the air drag reduction device, referring to figure 1. Generally speaking, an undercarriage 2 comprises at least:
- a left landing skid 7;
- a right landing skid also referenced 7.

Each left and right landing skid 7 has a front end 8 and an aft end 9.

Besides, an undercarriage 2 comprises:
. a front transverse element 10 and a rear transverse element 11; and
. an assembly means 12 (figure 2) for rigidly securing each the front and rear transverse elements (10-11) to the force take-up structure 6.

From figure 2, an air drag reduction device 3 according to the invention, has integrated inside hollow structures arranged into the skids 7 and into the front transverse arm 10, these structures forming a symmetrical air drag reduction device 3. The term symmetrical (relatively to a median plan parallel to direction X and Z) indicates, as in most embodiments, that the device 3 includes two similar structures, one integrated into the left skid 7 and into the front transverse arm 10, the other into the right skids 7 and into the front transverse arm 10. This air drag reduction device 3 comprises at least:
. an airflow intake front mouth 13,
. a restriction rearwards converging section 14,
. an accelerated airflow conveying duct 15,
. a double side airfoil distribution arrangement 16,
. arrangement 16, having a pair of laterally spaced nozzles 17.

Not referenced, a connecting section is included between each inner coupling linking the elements 13-16 above, in the air drag reduction device 3.

From upstream close to the front end 8 to downstream in the vicinity of the transverse arm, is detailed the respective left or right construction of the device 3. Located between the front end 8 of the skid 7 and the transverse element 10, the airflow intake front mouth 13 is ahead of said transverse element 10 and opened in downstream (at its left end) the restriction rearwards converging section 14.

Some embodiments, as per on figure 1 provides an airflow intake front mouth 13 with an anti-intrusion item 18. For instance, such an anti-intrusion item 18 comprises a grid at in front of the airflow intake front mouth 13. In some embodiments, the airflow intake front mouth 13 is shaped as a so-called NACA duct while the anti-intrusion item 18 may be or not slightly protuberant from the mouth 13, e.g in the shape of a nest.

In figure 2, the mouth 13 is slightly remote from the front end 8, e.g from one sixth of the longitudinal distance between the front end 8 and the transverse element 10. Here, the mouth 13 is extending mainly on the lower (inferior) side of the skid 7, under a bended up (e.g. curved) termination of this skid 7. In a so called "mustache" landing gear, e.g. as per the document GB2314053, the mouth 13 is located at least partly upon the transverse element.

According to Bernoulli Principle, when a fluid is forced into a duct with a deceasing diameter, the speed of a fluid inside a variable diameter tube increases and the pressure of that fluid decreases. See, e.g:
http://en.wikipedia.org/wiki/Bernoulli%27s principle
This applies to the restriction rearwards converging section (or stage) 14, at the outlet of which the speed of the airflow is logically increased, while the air pressure inside the device 3 is decreased.

Some embodiments of the device 3 comprise parts in one of the following materials: metal such as e.g. light alloy, plastics such as reinforced polymer, composite such as Kevlar, or the like.

The restriction rearwards converging section 14 has the overall shape of a cone, with the wider section upstream and the smaller section downstream. The section 14 is made of an added item e.g. in metal and / or plastics, rigidly secured inside the skid 7. In embodiment of figure 2, the section 14 is detachable from the undercarriage 2, thanks to reversible securing means. In the embodiment of figure 2, the restriction rearwards converging section 14 extends upon about half the distance between the front end 8 and the transverse element 10. Downstream to the restriction rearwards converging section 14, is connected the accelerated airflow conveying duct 15.

In figure 2, the accelerated airflow conveying duct 15 comprises an upstream longitudinal portion attached to the rear end of the section 14. This duct 15 also comprises a downstream upright portion which is attached to the upstream longitudinal portion. The downstream upright portion is connected to the upstream longitudinal portion by an elbow tube 19.
The upstream longitudinal portion is located by the front transverse element 10. On figure 2, the upstream longitudinal portion is located ahead the element 10, while the downstream upright portion is located inside this element 10.
In this embodiment, the duct 15 is made of a series of added items e.g. in metal and / or plastics, each rigidly secured inside the skid 7 and the element 10. The downstream upright portion, the upstream longitudinal portion and the elbow tube 19 are independent items, reversibly attached together to form the whole duct 15. In embodiment of figure 2, the duct 15. is detachable from the undercarriage 2, thanks to reversible securing means.
In embodiment of figure 2, the upstream longitudinal portion of the accelerated airflow conveying duct 15 extends upon about the third / half the distance between the front end 8 and the transverse element 10.

The double side airfoil distribution arrangement 16 is having a pair of laterally spaced nozzles 17 arranged at a. backwards portion of the front transverse element 10. At laterally spaced apart locations with respect to another from a median transverse profile of said front transverse element 10, each pair of laterally spaced nozzles 17 comprise one laterally inwards located nozzle 20 (or series of nozzles 20) and one laterally outwards located nozzle 21 (or series of nozzles 21).
In the transverse direction Y, the laterally inwards located nozzle(s) 20 and the laterally outwards located nozzle(s) 21 are remote one(s) from the other(s). The laterally inwards located nozzle(s) 20 and the laterally outwards located nozzle(s) 21 exit from the transverse element 10 respectively on the inward side and on the outward side of this transverse element 10.
In this embodiment, the arrangement 16 is made of a series of added items e.g. in metal and / or plastics, each rigidly secured inside the element 10. The arrangement 16 is composed of independent items, reversibly attached together to form the whole arrangement 16. In embodiment of figure 2, the arrangement 16 is detachable from the undercarriage 2, thanks to reversible securing means. From figure 2, it appears that the whole arrangement 16 looks like a pair of "butterfly wings".
In embodiment of figure 2, the arrangement 16 extends upon about the half of the distance between the skid 7 and the top end of the transverse element 10, where this element 10 is secured to the structure 6 by said assembly means 12.

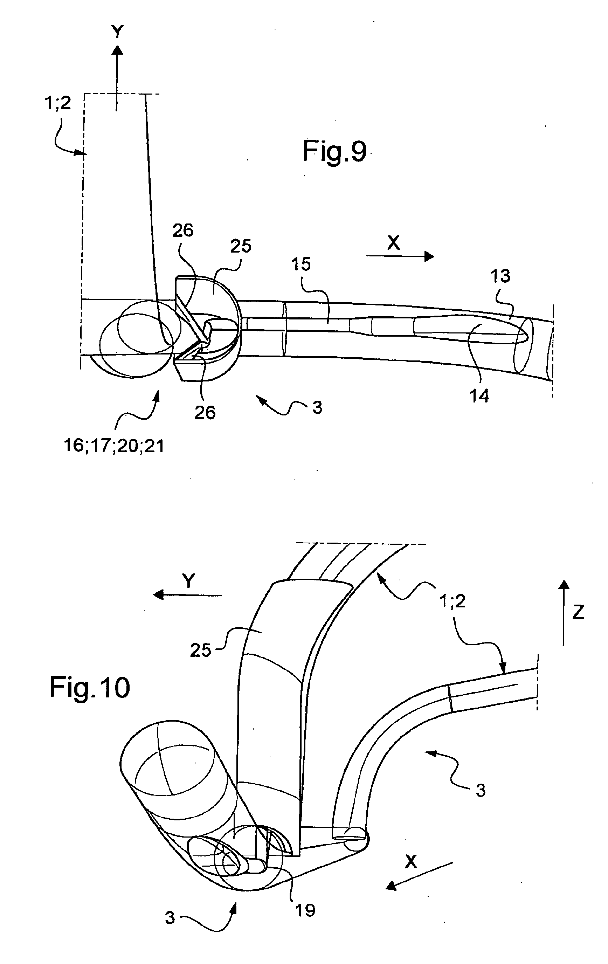

In the air drag reduction device 3 of figures 2-5 and 7, the airflow intake front mouth 13, the restriction rearwards converging section 14, the accelerated airflow conveying duct 15 and the double side airfoil distribution arrangement 16 are fully integrated into (i.e. mounted inside) the undercarriage 2. Only exhaust bores 22 ending the laterally inwards located nozzle(s) 20 and the laterally outwards located nozzle(s) 21 are flush with the outer envelope of the transverse element 10, thus exiting therefrom.
In the air drag reduction device 3 of figures 8-10, only the airflow intake front mouth 13, the restriction rearwards converging section 14, as well as the upstream longitudinal portion plus a bottom part of the elbow tube 19 of the accelerated airflow conveying duct 15 are integrated into (i.e. mounted inside) the undercarriage 2. The downstream upright portion plus a climax part of the elbow tube 19 are external added items, located outside of the transverse element 10 of the undercarriage 2.

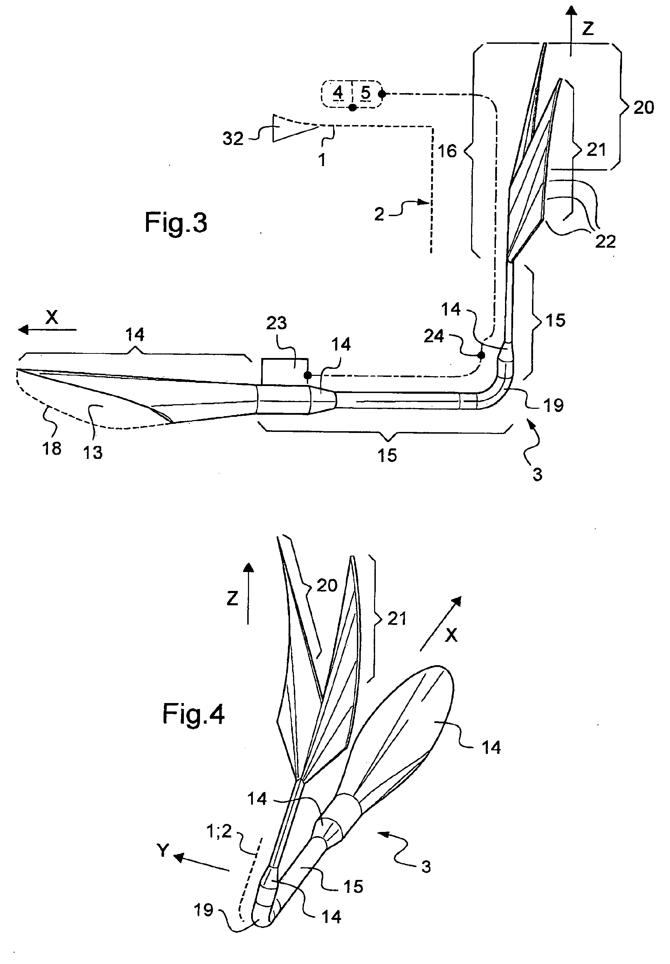

On figure 3, is provides in the device 3 a double restriction rearwards converging stage 14. The first upstream stage is conducted at the section 14 neighboring the mouth 13. The second restriction rearwards converging stage 14 is conducted downstream the elbow tube 19 of the duct 15, thanks to a second restriction rearwards converging section 14 to which is connected fluidly a final upright portion of the duct 15 and finally the arrangement 16.

When the double side airfoil distribution arrangement 6 is at least partly an additional attached structure, are provided attaching means for rigidly securing the additional attached structures to the undercarriage 2, so as to form an ancillary air drag reduction device 3. Such attaching means are for rigidly securing this ancillary air drag reduction device 3 to the undercarriage 2, in a detachable manner.

Some embodiments are fully external, i.e. with the whole device 3 mounted outside on the outer envelope of the skids 7 and transverse element 10. Some embodiments have exhaust bores 22, ending the laterally inwards located nozzle(s) 20 and the laterally outwards located nozzle(s) 21, located upon the rear transverse element 11. Some embodiments have laterally inwards located nozzle(s) 20 and laterally outwards located nozzle(s) 21 located both on the front element 10 and rear element 11.

In the embodiment of figure 3, the aircraft 1 has a flight control system 4 and an electric power supply system 5. The device 3 comprises one or a plurality of active airflow adjustment means 23. Such active airflow adjustment means 23 are logically connected via a connecting means 24 (e.g. in parallel to the duct 15) to the flight control system 4, the later then acting as an airflow computing controller. The connecting means 24 are electrically linked to the electric power supply system 5, so as to feed the active airflow adjustment means 23. Typically, the active airflow adjustment means 23 is made of one or a plurality of fan blowers or the like, e.g. attached to the undercarriage 2. Alternatively, the active airflow adjustment means 23 is located inside the force take-up structure 6, and the connecting means 24 comprise fluid distributing tubes abducting to the device 3, e.g. downstream to the restriction rearwards converging section 14.

The partly external embodiment of figures 7-8 is now detailed. The external added items with the downstream upright portion of the duct 15 plus the climax part of the elbow tube 19 are disposed behind an external spoiler funnel or external aerodynamic fairing 24, located outside of the transverse element 10 of the undercarriage 2. This external aerodynamic fairing 25 has a double side airfoil distribution arrangement 16 attached to by securing attachment legs 26 affixed (rigidly and detachably) to the transverse arm 10.
In this embodiment, the external aerodynamic fairing 25 is made of a series of added items e.g. in metal and / or plastics and/or composite, each rigidly secured outside the element 10 (or 11). The external aerodynamic fairing 25 is composed of independent items, reversibly attached together to form the whole funnel 25. In embodiment of figure 2, the external spoiler funnel 25 is detachable from the undercarriage 2, thanks to the reversible attachment legs 26.

The undercarriage 2 comprises in the embodiment at least a left arm bottom shoe 33 (figure 8) and a right arm bottom shoe (not referenced), each with an air drag reduction device 3. As exposed, not integrated parts of the device 3 are located in these arm bottom shoe (33). At least one of the airflow intake front mouth 13, the section 14, the accelerated airflow conveying duct 15 and the double side airfoil distribution arrangement 16 form an ancillary air drag reduction device (3) integrated into said left arm bottom shoe 33 (and right arm bottom shoe) of this undercarriage 2.

Punctual loads on the skids 7 are usually applied between the front and rear transverse elements 10 - 11, transferring this load to the undercarriage 2 by means of the skid shoe (33). Consequently the skid 7 area in front of the front transverse element 10 is low loaded so the mouth 13 inlet installed on this area does not jeopardize the strength of the undercarriage 2.

From the embodiment of figures 8-10, it appears that the invention allows for beneficial possibilities, among which are, inspection of device 3 (for maintenance), customizing of existing undercarriage 2 with the invention, mass impact, cost reduction and overall stress resistance impact of invention upon the undercarriage 2.

The embodiment of figures 8-10 allows for the device 3 to ease a visual inspection, e.g. previously each flight of the aircraft 1. For inspection it will be similar to the inspection of whatever kind of aerodynamic tube or conduct, for example.

In terms of mass impact, the invention, as per in embodiment of figures 8-10 allows to be manufactured in plastic (for example) and the mass impact will be negligible.

Obviously the implementation of this system into whatever existing aircraft's 1 undercarriage 2 associated to design modification, overall design (transversal elements in two parts), cutting design (just "only make the cuts and the reinforced). In embodiments, the concept of cuts and no slots into the existing or designed undercarriage 2 is another possibility.

In terms of mounting, the device 3 is fitted to the existing structure of the undercarriage 2 thanks to special legs 26 (also called "wings") for being folded in the outside (for example and be bonded, riveted....).

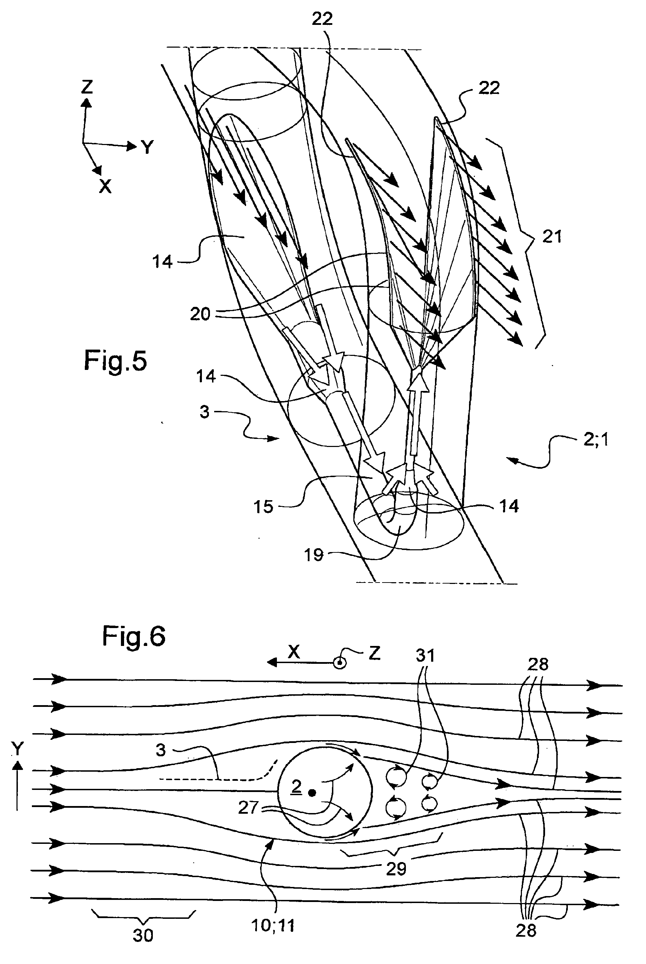

Now, reverting to figure 6, it is exposed how an accelerated airflow is being forced outside said double side airfoil distribution arrangement 16, thus provoking a rearward offsetting that breaks away points of boundary 27 of air layers 28 surrounding the transverse element 10 or 11, with an air drag reduction effect. For clarity, the stages (or sub-stages called "steps" as well as the sub-steps / stages called "actions" are designated by with the same reference alphanumeric signs than the physical structures where such stages / steps / actions occurs.
According to the invention, in brief, the following stages are provoked:
. an incoming airflow to be collected at an airflow intake stage 13,
. a collected airflow to be accelerated at a restriction rearwards converging stage 14,
. during an accelerated airflow conveying stage 15, an accelerated airflow is directed to one or a plurality of the airfoil distribution arrangements 16, thus accomplishing an airfoil distribution stage 16. This airfoil distribution stage 16 is provoking the rearward offsetting stage 29 (figure 6) that breaks away points of boundary 27 of the air layers 28 around the front transverse element 10 and / or the rear transverse element 11.
The invention thus allows for a valuable air drag reduction to be adapted to an undercarriage 2 with skids 7, even if this undercarriage 2 is of an existing model. With such a control upon boundary layers (28) no further noticeable sustentation is created.

More precisely, the air drag reduction method according to the invention provides for:
- said airflow intake stage 13 to be provoked between the front end 8 of each skid 7 and the transverse element(s) 10 and / or 11, through the airflow intake front mouth 13 located ahead the corresponding transverse element(s),
- said restriction rearwards converging stage 14 to be provoked in said restriction rearwards converging section 14 connected downstream to said accelerated airflow conveying duct 15,
- said accelerated airflow conveying stage 15 to be being provoked in accelerated airflow conveying ducts 15,
- said laterally rearwards distributing stage 16 to be being provoked at each of the double side airfoil distribution arrangement 16, i.e. at the rearward offsetting stage 29.

After the airflow intake stage 13, the collected airflow is accelerated at the restriction rearwards converging stage 14. Then, this accelerated airflow is directed to the double side airfoil distribution arrangement 16 during the accelerated airflow conveying stage 15 and forced outside the side airfoil distribution arrangement 16, thus provoking the rearward offsetting stage 29 that breaks away the points of boundary 27 of the air layers 28.

In an embodiment without active blowing, the accelerated airflow forced outside each of the side airfoil distribution arrangement 16 is fully obtained from the incoming airflow collected at the conveying stage 15.

In another embodiment with the active blowing provoked by the active airflow adjustment means 23, the accelerated airflow forced outside each of the arrangements 16 is partially obtained from the incoming airflow collected at the conveying stage 15, while a mechanically flow increasing step 30 (figure 6) is provoked between the airflow intake stage 13 and the laterally rearwards distributing stage 14, thus the accelerated airflow is partially obtained from said mechanically flow increasing step 30, operated by the active airflow adjustment means 23. Typically, the mechanically flow increasing step 30 is operated at least partially through an electrically blowing action of said mechanically flow increasing step 30.

In embodiments, at least an active airflow adjustment means 23 comprises an opening / closing movable flap, typically arranged upstream the mouth 13, and logically connected to an on-board electronic control system 4. Such an opening / closing movable flap allows for adjusting the available inlet section size, according to the required amount of airflow to be collected inside the corresponding device 3.

E.g. when comprising an mechanically flow increasing step 30, the air drag reduction method of the invention is at least partially controlled through an airflow computing process, this airflow computing process being logically dependant from a flight control system 4 of the rotary wing aircraft 1, e.g. of a fly-by-wire type.

The invention is finally summarized s follows.

The invention acts upon Drag to which are submitted aircrafts 1 into forward flight and cruise flight. As understood, the transversal arms 10-11 of the helicopters Skids 7 produce approximately 10-20% of the global aircrafts 1 Drag into the forward flight. The invention could apply to whatever landing gear 2, in order to reduce air Drag produced by the transversal arms 10-11.

As approximately 10-20% of the global aircrafts 1 Drag in forward flight (especially in cruise flight) is produced by the behavior of the transversal elements 10-11 into the air stream, focus on the cross section of these elements into the air stream, can be seen as stream lines (28) around the cross section surface (envelope of the transverse elements 10-11) which breaks away of the surface. This results in a Energy loose (Pressure and Speed looses). This has been called "Boundary Layer Theory" by the aerodynamicists.

The airflow lines 28, during low speed flight, show their adaptation trend to a body introduced into an air or fluid stream, the airflow lines have a constant behavior surrounding the surface with a complete adaptation to the surface, without major loose of Energy, therefore a minimal residual drag results.

By other hand, if the same body is introduced into an air or fluid stream with medium-high speed ratios, several modifications to the above will occur. Then, the Airflow lines (Lines of Pressure and Speed of air or fluid particles) try to maintain the behavior presented into the low speeds scenarios, but for medium and high speed air-fluid stream, the quantities of energy (high local pressures and speeds) that they have, make that the airflow has trend to break away from the body surface.

When the nearest airflow line (boundary layer) breaks away from the surface, the energy of this layer and all the layers above it, show pressure looses and speed changes, these changes turn on whirlwinds 31 (figure 6), which are a major source of the drag. These whirlwinds 31 will be increased in the same way that the air or fluid speed around the surface will be increased.

The invention mitigates this. It representatively reduces (or avoids) the trend of the boundary layer for breaking away from the surface of the skid arm. This is obtained with an increase of the boundary layer energy, thanks to this, into the medium-high speed scenarios, the generation of the whirlwinds 31 is reduced, due to the boundary layer will be attached to the body surface, and also thanks to this, the breaking point 27, if still exists, it is optimized.

As exposed, various ways for obtaining this embodies the invention.

Create an artificial flow of air around the surface of the body, in order to delay / displace rearwards the allocation of the breaking point and in order to increase the boundary layer energy. Thanks to the arrangement 16 with pairs of slots or bores 22 strategically allocated (defined in function of the helicopter necessities, by the Aerodynamic study) an extra airflow could be flown into the boundary layer with the result yet commented.

Based upon Aerodynamic field (Fluid Mechanics), without the invention the Boundary Layer that is the nearest air layer around a surface, which is introduced into fluid stream, due to the high speed of the fluid stream lines (high energy of it-for high and medium movement speeds), has trend to break away from the surface. As a result, is obtained a decrease in the aerodynamic efficiency and an increase of the Surface's Drag.

The invention is favorable, although some disadvantages are due the introduction of discontinuities into the surface and mechanic systems into them. According to case to case know-how and studies, is obtained the most appropriate allocation and the blowing angle for the slots. These aspects (allocation, size, dimensions and blowing angles of slots) are treated and defined by an aerodynamic study for each one the landing gear profiles, in accordance with the Aircraft 1 necessities.

The invention allows for an Aerodynamically System, which uses the forward movement of the helicopter into the air stream (forward flight-cruise flight) for generating a compressed airflow (thanks to one or several compression steps) through the structure of the landing gear 2, which (compressed airflow) at the end will be expanded and ejected outside of the skid structure by one or a plurality of slots, allocated e.g. into the rear side of the transversal skid elements 10-11, obtaining the attachment of boundary layer to the skid structure and therefore reducing the drag.

The following exposes embodiments of the main parts for the invention.
- Air Intake (mouth 13): Compress and Drive the Airflow obtained from the forward flight to the horizontal duct of the invention.
The Size, Shape and Attack Angle of this Air Intake mouth 13 are defined in accordance with the necessities and architecture of the aircraft 1.

In some embodiments, just In front of the Air Intake mouth 13 is allocated a Grid (18), for avoiding possible inclusion of foraging elements.
- Conveying Duct (15): It is e.g. a duct installed all along the first part of the longitudinal arm of the gear 2. This Duct drives the Air captured by the Air Intakes, and into it the airflow suffers another aerodynamic effect. The end of this horizontal duct is e.g. a corner (elbow 19), which connects this duct with the upright part of the device 3.

The Size, Length; Diameter and the number of compressor steps allocated along it, will depend of the necessities and architecture of the aircraft 1.
- Vertical Compression Duct: It is a duct installed into the transversal arm. This duct connects the upstream part with the more downstream part, without Pressure and Speed looses in order to have airflow with the maximum quantity of Energy.

Into this part the airflow suffer again another aerodynamic effect. The Size, Length and Diameter of this duct 15 and the number of the compression steps (14) allocated in it, is defined and adapted to the necessities and architecture of the aircraft 1.
- Single / Double / multiple Nozzle (e.g. "Butterfly Nozzle" as per figures 3-5): a Nozzle blows the accelerated flux of air to each one of the slot(s) allocated all along the transversal element(s) 10-11. The main aim of it will be drive the airflow from the upstream to the downstream, into this travel the nozzle(s) expand the airflow previously to be ejected by the slot(s), in order to increase the energy of the boundary layer Effect.

The Size, Shape and Angle of this/these Nozzle/s will be in accordance with the necessities and architecture of the helicopter.
- bores 22 or Slots: Are the holes or spaces by which the airflow is blown outside e.g. rearwards. The airflow is blown outside of the transverse element(s) 10-11 with the aim of delay the breaking away point of the boundary layer and increase the energy of it.

The Size, Shape and Blowing Angle of the Slot(s) are defined in accordance with the necessities and architecture of the helicopter.

This system it will be allocated inside the helicopter skids (e.g. embedded into them), and e.g. only the front transversal arms is affected by the invention. Nevertheless the invention is applied to the rear transverse arms of the landing gear of the helicopter. The Slot(s) are e.g. allocated in the rear side (rearwards) of the transversal arms, in order to obtain the exposed useful results, to increase the energy of the boundary layer, and attach it to the surface as much as possible for decreasing the drag of the skids and therefore the whole drag of the helicopter.

The longitudinal slot(s) allocation into one or plural transversal arm(s) is in the most effective areas, e.g. close to or into parts of the transversal arms which are the most exposed to the air stream. This avoids areas where the air flow has suffered any modification (for example the front part of the longitudinal arm of the skid. Nevertheless the possible allocation is determined with by the Aerodynamic study, thanks to a previous Wind tunnel analysis for this solution.

In examples, the invention has the following embodiments:
. Slot Number:
   - One Slot: The Nozzle will be a single part Nozzle. The airflow will be blown outside by only one slot. The only one slot system is applied if the helicopter or Skid necessities reveal that it will be enough with only one slot for reducing the drag.
   - Plural Slots: the invention is described above with two or more slots for the side airfoil distribution arrangement
. Invention Allocation:
   - Front element 10.
   - Front element 10 plus Rear element 11: The invention is e.g. extended also to the rear transversal arm of the helicopter. Then, the flux of air for them is e.g. provided by an extension of the Horizontal Compression duct. The principle of functioning it will be the same that the Front version.
. Electric Fan Inclusion (23): some embodiments provides for an electrical fan e.g. just at the end of the Air Intake, in order to increase the quantity of air blown into the device, and in order to obtain always the appropriate quantities or ratios of airflow, for whatever flight speed / scenario. These Electrical fans is powered by the Electric Circuit Supply (5) of the aircraft 1, and e.g. controlled by some embarked electronic equipment such as the auto pilot system (AP).

At least one air Intake inlet 32 (figure 3) into the Fuselage of the aircraft 1 is provided in an embodiment: The air Intake 32 is e.g. allocated in the upper area of the transversal element (10 / 11) close to the center fuselage of the aircraft 1. One or a plurality of air intake 32 could be a so called NACA duct or inlet, or any special hood (grid 18) for this aim. Each air Intake 32 is fluidly connected to the device 3, thus providing an airflow to be accelerated and blown, to the later.

In another embodiment of the invention, at least one of the said air intake 32 is at the front end 8.

The invention is not limited to the embodiments illustrated, and encompasses equivalent means to the shown ones.

## Claims

1. An air drag reduction method for an undercarriage (2) in a rotary wing aircraft (1), the undercarriage (2) comprising at least:
. two landing skids (7), each with a front end (8) and an aft end;
. a front transverse element (10) and a rear transverse element (11);
. an assembly means (12) for rigidly securing each the front and rear transverse elements to a force take-up structure (6) of the aircraft (1), **characterized in that**: the drag reduction method provokes from upstream to downstream,
. an incoming airflow to be collected at an airflow intake stage (13),
. a collected airflow to be accelerated at a restriction rearwards converging stage (14),
. during an accelerated airflow conveying stage (15), an accelerated airflow to be directed to one or a plurality of side airfoil distribution arrangements (16), said airfoil distribution arrangements being disposed by at least said front transverse element and / or rear transverse element,
. the accelerated airflow then being forced outside said side airfoil distribution arrangement (16), thus provoking a rearward offsetting stage that breaks away points of boundary (27) of air layers (28) surrounding the front transverse element (10) and / or rear transverse element (11), with an air drag reduction effect.

2. The air drag reduction method according to claim 1, **characterized in that**:
. said airflow intake stage (13) is provoked between the front end (8) of each skid (7) and the transverse element (10 / 11), through at least one airflow intake front mouth (13) located ahead the transverse element, each airflow intake front mouth being connected downstream to at least one restriction rearwards converging section (14),
. said restriction rearwards converging stage (14) being provoked in said restriction rearwards converging section(s), each restriction rearwards converging section being connected downstream to at least one accelerated airflow conveying duct (15) located by the front transverse element (10 / 11),
. said accelerated airflow conveying stage (15) being provoked in accelerated airflow conveying duct(s), each accelerated airflow conveying duct being connected downstream to at least one airfoil
. distribution arrangement (16) with at least a laterally spaced nozzle(s) (20, 21) arranged at longitudinally overhanging position(s) of said transverse element (10 / 11), at laterally spaced apart location(s) with respect to a median transverse profile of said transverse element (10 / 11),
. said laterally rearwards distributing stage (16) being provoked at each of the airfoil distribution arrangement (16),
. the drag reduction method thus provoking an incoming airflow to be collected at the airflow intake stage, a collected airflow to be accelerated at the restriction rearwards converging stage, an accelerated airflow to be directed to the side airfoil distribution arrangement at the accelerated airflow conveying stage and forced outside said double side airfoil distribution arrangement, thus provoking a rearward offsetting stage (29) that breaks away points (27) of boundary air layers (28) surrounding the front transverse element (10) and / or rear transverse element (11).

3. The air drag reduction method according to claim 1, **characterized in that** the accelerated airflow forced outside each of said side airfoil distribution arrangement is fully obtained from the incoming airflow collected at the conveying stage (15).

4. The air drag reduction method according to claim 1, **characterized in that** the accelerated airflow forced outside each of said side airfoil distribution arrangement is partially obtained from the incoming airflow collected at the conveying stage, a mechanically flow increasing step (30) being provoked between the airflow intake stage and the laterally rearwards distributing stage, thus the accelerated airflow being partially obtained from said mechanically flow increasing step.

5. The air drag reduction method according to claim 4, **characterized in that** the mechanically flow increasing step is provoked between the airflow intake stage and the accelerated airflow conveying stage, at least partially through a electrically blowing action of said mechanically flow increasing step (30).

6. The air drag reduction method according to claim 1, **characterized in that** the air drag reduction method is at least partially controlled through an airflow computing process, this airflow computing process being logically dependant from a flight control system (4) of the rotary wing aircraft (1), e.g. of a fly-by-wire type.

7. An air drag reduction device (3) for an undercarriage (2) in a rotary wing aircraft (1), said undercarriage (2) comprising at least:
· two landing skids (7), each with a front end (8) and an aft end;
· a front transverse element (10) and a rear transverse element (11);
· an assembly means (12) for rigidly securing each of the transverse elements to a force take-up structure (6) of the aircraft (1), said air drag reduction device (3) being **characterized in** comprising:
b etween the front end (8) of each skid (7) and the front (10) and / or rear (11) transverse element, at least one airflow intake front mouth (13) located ahead said transverse element, each airflow intake front mouth being connected downstream to at least one restriction rearwards converging section (14),
. said accelerated airflow conveying section (14) being located by the front and / or rear transverse element and being connected downstream to at least one accelerated airflow conveying duct (15),
. at least one side airfoil distribution arrangement (16) having at least a pair of laterally spaced nozzles (20, 21) arranged at a longitudinally and / or transversally overhanging location of at least a front transverse element and / or a rear transverse element, said laterally spaced apart locations being overhanging with respect to another from a median transverse profile of said front transverse element and / or a rear transverse element, each pair of laterally spaced nozzles comprising at least one laterally inwards located nozzle (20) and at least one laterally outwards located nozzle (21),
. the air drag reduction device (3) being arranged to force an accelerated airflow outside said double side airfoil distribution arrangement (16), thus provoking a rearward offsetting stage (29) of breaking away points (27) of boundary air layers (28) surrounding the front transverse element (10) and / or rear transverse element (11), with a air drag reduction effect.

8. The air drag reduction device (3) according to claim 7, **characterized in that** at least one of the airflow intake front mouth (13), the restriction rearwards converging section (14), the accelerated airflow conveying duct(15), and the double side airfoil distribution arrangement (16) is at least partly integrated to the undercarriage (2).

9. The air drag reduction device (3) according to claim 7, **characterized in that** at least one of the airflow intake front mouth, the restriction rearwards converging section (14), the accelerated airflow conveying duct and the double side airfoil distribution arrangement is at least partly an additional attached structure, with attaching means (26) for rigidly securing the additional attached structure(s) to the undercarriage (2), e.g. all of the airflow intake front mouth, the restriction rearwards converging section (14), the accelerated airflow conveying duct and the double side airfoil distribution arrangement form an external or ancillary air drag reduction device (3), with attaching means for rigidly securing this ancillary air drag reduction device (3) to the undercarriage (2), preferably in a detachable manner.

10. The air drag reduction device (3) according to claim 7, **characterized in that** at least one of the airflow intake front mouth, the restriction rearwards converging section (14), the accelerated airflow conveying duct and the double side airflow distribution arrangement comprises active airflow adjustment means (23), e.g. said active airflow adjustment means being logically connected to an airflow computing controller possibly in a control system (4) of the aircraft (1).

11. The air drag reduction device (3) according to claim 10, **characterized in that** the airflow adjustment means (23) are logically connected to an airflow computing controller which is being logically dependant from a flight control system (4) of the rotary wing aircraft (1), e.g. of the fly-by-wire type.

12. The air drag reduction device (3) according to claim 7, **characterized in that** said air drag reduction device (3) comprises:
an anti-intrusion item (18), e.g. comprising a grid upstream at least one of: the airflow intake front mouth (13) and / or the restriction rearwards converging section (14) and / or the accelerated airflow conveying duct (15), e.g. an anti-intrusion item (18) is upstream a second accelerated airflow conveying section (14) downstream to at least one accelerated airflow conveying duct (15) and upstream a double side airflow distribution arrangement (16) possibly of the butterfly-shaped type.

13. An undercarriage (2) **characterized in that** said undercarriage (2) comprises at least one air drag reduction device (3) according to claim 7 and / or works the air drag reduction method according to claim 1.

14. The undercarriage (2) according to claim 13, **characterized in that** said undercarriage (2) comprises at least a left arm bottom shoe and a right arm bottom shoe, each connecting a transverse element (10 / 11) to a corresponding skid (7), said left arm bottom shoe and right arm bottom shoe comprising at least partly an air drag reduction device (3).

15. A rotary wing aircraft (1) **characterized in that** said aircraft (1) includes at least one air drag reduction device (3) according to claim 7 and / or the undercarriage (2) according to claim 14.
